# EUROPÄISCHE PATENTSCHRIFT

(11) **EP 2 394 545 B1**
(45) Veröffentlichungstag und Bekanntmachung des Hinweises auf die Patenterteilung: **17.07.2013**
(21) Anmeldenummer: 11168173.0
(22) Anmeldetag: 31.05.2011
(51) Int. Cl.: A47J 43/07, A47J 47/16

(54) **Aufbewahrungsbehälter für ein Handküchengerät nebst Zubehör**
Storage container for a hand-held kitchen appliance and accessory
Récipient de stockage pour un appareil de cuisine manuel en plus d'un accessoire

(30) Priorität: 09.06.2010 DE 102010029895; 10.06.2010 DE 102010029956
(43) Veröffentlichungstag der Anmeldung: 14.12.2011
(73) Patentinhaber: BSH Bosch und Siemens Hausgeräte GmbH, 81739 München (DE)
(72) Erfinder: Baacke, Bettina, 75172 Pforzheim (DE)

(56) Entgegenhaltungen:
- EP-A2- 1 932 459
- GB-A- 2 347 095

## Beschreibung

### Hintergrund der Erfindung

Die Erfindung betrifft einen Aufbewahrungsbehälter für ein Handküchengerät, insbesondere für einen Stabmixer.

### Stand der Technik

Handküchengeräte sind üblicherweise elektrische Küchengeräte, die bekanntermaßen zum Kneten, Rühren, Raspeln, Pürieren oder Entsaften eingesetzt werden. Diese Geräte bestehen aus einer Grundeinheit, welche eine oder mehrere Schnittstellen zum Ankoppeln von Werkzeugen zum Bewerkstelligen der oben genannten Aufgaben aufweist. Weiter können Rühr- oder Auffangschüsseln und verschiedenen Anbauteilen, beispielsweise Zerkleinerer, Mixaufsatz, Getreidemühle oder Saftpresse sowie verschiedenen Einsätzen bzw. Verarbeitungswerkzeuge (Schneid- und Raspelscheibe, Knethaken, Schlag- und Rührbesen) vorgesehen werden. Die Verarbeitungs- bzw. Bearbeitungswerkzeuge können scheiben-, trommel- oder kegelförmig sein. Einige Geräte erlauben das Aufstecken einzelner Knethaken oder Schneebesen. Rühr- oder Auffangschüsseln sind im Gerät integriert oder können abgenommen werden; teilweise sind eigene Werkzeuge fest eingebaut. Manche Zusatzgeräte sind komplette Einheiten (Fleischwolf, Saftpresse), die nur den Antrieb der Maschine nutzen. Die Drehzahl bei elektrischen Geräten kann meistens in mehreren Stufen reguliert werden oder ist stufenlos regelbar.

Üblicherweise werden die Werkzeuge des Küchengerätes getrennt aufbewahrt oder das Gerät weist eine Schublade bzw. ein im Gehäuse angeordneten Aufnahmeraum auf. Die Schubladen beinhalten üblicherweise scharfe Werkzeuge wie Zerkleinerungsmesser, Reib- Raspeleinsätze etc.

Auch bekannt ist, dass Zubehörteile innerhalb des Küchengerätegehäuses untergebracht werden können, welches von einem Deckel verschlossen ist. Der Deckel wird mit Hilfe von Scharnieren an das Gehäuse angebracht, so dass ein Benutzer Zugang zu den Zubehörteilen haben kann. Solch eine Vorrichtung wird in der US 4 733 827 offenbart. Die DE 600 08 405 T2 zeigt einen Halter zum Aufbewahren von Zubehörteilen eines Haushaltsgeräts. Der Halter ist als Körper ausgebildet, auf welchem das Haushaltsgerät angeordnet wird.

Ferner ist in der EP 1 932 459 A2 eine Küchenvorrichtung mit einem kastenförmigen Trägerteil und einem Schneidebrett offenbart, das auf dem Trägerteil aufgelegt ist. Hingegen zeigt die GB 2 347 095 A eine Haltevorrichtung für Haushaltsgeräte, die auf die Bearbeitungsschüssel eines Haushaltsgeräts anbringbar ist.

Die bekannten Lösungen bringen jedoch unterschiedliche Nachteile mit sich. So kann beispielsweise die Schublade beim häufigen Gebrauch Defekte aufweisen bzw. zerstört werden, welches das Beschaffen eines neuen Küchengeräts mit sich bringt. Ferner erfordert die Herstellung solcher Küchengeräte eine hohe Anzahl an Produktionsschritten, welches sich ebenso als unwirtschaftlich erweisen kann. Weiter zeigt der Stand der Technik keine geeigneten Maßnahmen zur Aufbewahrung aller Komponenten eines Küchengeräts, d.h. Antriebseinheit nebst Zubehör.

### Der Erfindung zugrundeliegende Aufgabe

Folglich liegt der Erfindung die Aufgabe zugrunde, einen stabilen, funktionellen und leicht handhabbaren Aufbewahrungsbehälter für Handküchengeräte nebst Zubehör bereitzustellen.

### Erfindungsgemäße Lösung

Die Lösung der gestellten Aufgabe gelingt durch ein Küchengerät mit den Merkmalen des Anspruchs 1. Es wird ein Aufbewahrungsbehälter für ein Handküchengerät, insbesondere einen Stabmixer, nebst Zubehör bereitgestellt. Der erfindungsgemäße Aufbewahrungsbehälter weist einen rahmenförmigen Grundkörper auf, der zwei Seitenflächen haltert. Vorzugsweise ist eine Seitenfläche eingerichtet, dass diese vom Grundkörper abgenommen werden kann. Folglich kann ein Benutzer des Küchengeräts bzw. des Aufbewahrungsbehälters leicht und einfach den Inhalt, d.h. das Gerät und das Zubehör, erreichen. Weiter kann die abgenommene Seitenfläche für weitere mögliche Aufgaben eingesetzt werden. Durch den rahmenförmigen Aufbau des Aufbewahrungsbehälters kann eine einfache und platzsparende Lagerung beispielsweise in einem Küchenschrank gewährleistet werden. Weiter ist es möglich mehrere, unterschiedliche Aufbewahrungsbehälter von unterschiedlichen Handküchengeräten zu stapeln oder nebeneinander anzuordnen, so dass der Benutzer leicht das gewünschte Gerät bzw. den gewünschten Aufbewahrungsbehälter in Betrieb nehmen bzw. verwenden kann.

Gemäß der Erfindung sind die Halterungen für Handküchengerät und dessen Zubehör auf einem Träger angeordnet, welcher vorzugsweise auf der unteren Querseite, insbesondere um 10° bis 20°, vorzugsweise um 15°, zu der abnehmbar ausgebildeten Seitenfläche hin schwenkbar ausgebildet ist, vorzugsweise so, dass die gehalterten Gegenstände aus einem Abdeckbereich der oberen Querseitenfläche hervorragen. Somit hat ein Benutzer einen einfachen Zugriff auf das Handküchengerät und auf die weiteren gehalterten Zubehörteile des Handküchengeräts.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Es ist bevorzugt, dass der Grundkörper recheckförmig aus zwei Längs- und zwei Querseiten gebildet ist. Die Rechteckform des Grundkörpers erlaubt eine stabile und platzsparende Lagerung des Aufbewahrungsbehälters beispielsweise in einem Küchenschrank. Auch möglich ist eine Wandfixierung des Aufbewahrungsbehälters, der somit stabil an einer Wand befestigt werden kann. Falls mehrere Aufbewahrungsbehälter vorhanden sind, können diese folglich leicht und sicher gestapelt werden.

Zweckmäßigerweise sind an der unteren Querseite des Grundkörpers Halterungen für das Handküchengerät und dessen Zubehör ausgebildet. Diese Anordnung ist instinktiv für einen Benutzer, so dass dieser schnell die gewünschten Gegenstände griffbereit hat. Weiter wird durch diese Anordnung der Halterungen an der unteren Seite des Grundkörpers während eines möglichen Transports des Behälters eine stabile Lage erreicht, so dass die gelagerten Gegenstände sich nicht unkontrolliert innerhalb des Grundkörpers bewegen können. Der Transport des Aufbewahrungsbehälters erfolgt üblicherweise am Tragegriff, so dass die untere Seite in Richtung des Bodens zeigt. Folglich hält die Schwerkraft zusätzlich die Gegenstände in den entsprechenden Halterungen.

Es ist bevorzugt dass die Halterungen des Trägers korrespondierend zu den Koppelstellen der Werkzeuge und/oder des Außengehäuses des Handküchengeräts ausgebildet sind. Somit kann eine sichere Fixierung der Gegenstände gewährleistet werden und weiter kann ein Benutzer auf Basis der Form der Halterungen die unterschiedlichen Teile instinktiv an die Richtige Position auf dem Träger anordnen.

Weiter ist im Behälter ein Staufach für ein Stromkabel ausgebildet. Folglich hat ein Benutzer alle Funktionskomponenten des Handküchengeräts ständig griffbereit, und muss diese nicht mühsam suchen. Dies eignet sich insbesondere im Falle eines akkubetriebenen Handküchengeräts, der nur im Bedarfsfall mit einem Stromkabel über eine geeignete Ladestation aufgeladen werden muss.

Gemäß einem Ausführungsbeispiel ist die herausnehmbare Seitenfläche vorzugsweise magnetisch ausgebildet und/oder als Back- oder Arbeitsplatte verwendbar. Die Seitenfläche kann folglich zur Verarbeitung von Nahrungsmittel verwendet werden, und weiter kann durch den magnetischen Effekt eine Haltekraft zwischen Platte und der darauf gelagerten, ebenfalls magnetischen oder magnetisierbaren; Gegenstände entstehen. Die gewährleistet einen sicheren Betrieb.

Vorteilhafterweise ist die herausnehmbare Seitenfläche aus einem Metall gefertigt und als Standfläche für eine am Gehäuse des Handküchengeräts ausgebildete, vorzugsweise magnetisch oder metallisch ausgebildete, Abstellfläche dient. Somit kann eine Haltekraft zwischen Handküchengerät und Seitenfläche entstehen, so dass beispielweise ein Herunterfallen des Geräts von einer Arbeitsplatte vermieden werden kann.

In einer möglichen Ausführungsform der Erfindung ist seitlich der Längsseiten des Grundkörpers je ein Führungsbereich für einen ausziehbaren, die obere Querseite übergreifenden Tragegriff ausgebildet ist, wobei vorzugsweise in der im mittleren Bereich der oberen Querseite eine Griffmulde zum untergreifen des Tragegriffs ausgebildet ist. Dadurch hat ein Benutzer eine einfache Möglichkeit zum Tragen des relativ schweren Aufbewahrungsbehälters und kann den Griff, falls nicht gewünscht, entlang des Führungsbereichs in eine Endlage einbringen. In dieser Endlage weist der Griff keine hervorstehenden Bereiche, und der Aufbewahrungsbehälter kann folglich weiterhin platzsparend gelagert werden.

Zweckmäßigerweis ist die abnehmbare Seitenfläche am Grundkörper entlang von Führungsnuten führbar. Diese sind leicht und kostengünstig in der Herstellung und können weiter einen sicheren Halt der Seitenfläche während eines Transports gewährleisten.

### Kurzbeschreibung der Figuren

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen:
Fig. 1: eine perspektivische Ansicht des Aufbewahrungsbehälters im verschlossenen Zustand;
Fig. 2: den offenen Aufbewahrungsbehälter samt Zubehör und die abgenommene Seitenfläche als Arbeitsplatte für das Handküchengerät;
Fig. 3: den Aufbewahrungsbehälter im halboffenen Zustand;
Fig. 4: eine Draufsicht auf den Aufbewahrungsbehälter; und
Fig. 5: eine perspektivische Ansicht des Behälters mit verschwenktem Trägerteil.

### Ausführliche Beschreibung der Erfindung anhand mehrerer Ausführungsbeispiele

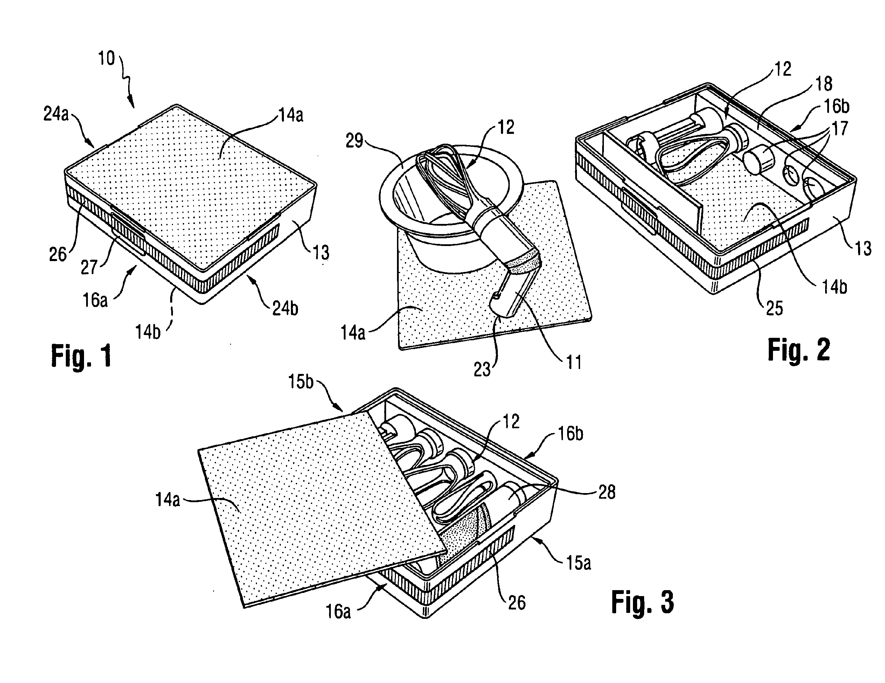

Fig. 1 zeigt eine mögliche Ausführungsform eines Aufbewahrungsbehälters 10 gemäß vorliegender Erfindung in einer perspektivischen Ansicht. Der Behälter 10 umfasst einen rahmenförmigen Grundkörper 13, der gemäß diesem Ausführungsbeispiel eine rechteckige Grundfläche aufweisen kann. Durch den rahmenförmigen Aufbau des Grundkörpers 13 kann eine platzsparende Lagerung des Aufbewahrungsbehälters samt Handküchengerät und Zubehör beispielsweise in einem Küchenschrank erreicht werden.

Der Aufbewahrungsbehälter 10 ist in der Fig. 1 im verschlossenen Zustand gezeigt, in welchem die abnehmbare Seitenfläche 14 a auf dem rahmenförmigen Grundkörper 13 angeordnet ist. Die Seitenfläche 14a ist aus einem geeigneten festen Material hergestellt und kann mittels Führungsnuten am Grundkörper 13 gehaltert werden. Die Führungsnuten erlauben eine schubladenartige Bedienung der abnehmbaren Seitenfläche 14, die für jeden Benutzer leicht verständlich ist. Weitere alternative Halterungsmöglichkeiten für die Seitenfläche 14a am Grundkörper 13 sind vorstellbar. So ist es beispielsweise denkbar, dass der Grundkörper 13 Klemmen (nicht gezeigt) aufweist, welche die abnehmbare Seitenfläche 14a umfassen und in einer Endlage fixieren, so dass der Inhalt des Aufbewahrungsbehälters verdeckt werden kann. Durch die sichere Fixierung der Seitenfläche 14a am Grundkörper 13, kann diese beispielsweise sogar in ihrer Endlage als Arbeitsfläche in der Küche dienen. Dazu muss aber gewährleistet werden, dass während der Bearbeitung von Lebensmitteln auf der Seitenfläche 14a keine Flüssigkeiten oder desgleichen innerhalb des Aufbewahrungsbehälters 10 gelangen können. Dies kann selbstverständlich vermieden werden, falls die Seitenfläche 14a abgenommen ist und als Arbeitsplatte ohne Grundkörper 13 in der Küche eingesetzt wird.

Der Aufbewahrungsbehälter 10 gemäß dieser Ausführungsform weist einen am Grundkörper 13 angeordneten Tragegriff 26 auf. Der Griffbereich des Tragegriffs 26 verläuft im Wesentlichen entlang einer Querseite 16b des Grundkörpers 13. Der Tragegriff 26 ist entlang der Längsseiten 24a, 24b des Grundkörpers 13 verschiebbar gelagert, so dass der Griff schubladenartig in einer Endlage verschoben werden kann. Dazu ist ein Führungsbereich 25 am Grundkörper 13 vorgesehen. Der Führungsbereich 25 ist an den Längsseiten 24a, 24b des Körpers 13 implementiert.

Diese entsprechende Endlage des Tragegriffs 26 entspricht der Lage, in welchem der Griff 26 durch einen Benutzer nicht verwendet werden möchte. In diesem Fall versinkt der Haltebereich des Griffs 26 vollständig in die Querseite 16a des Grundkörpers 13, welches einer wesentlichen Platzersparnis zur Lagerung des Aufbewahrungsbehälters 10 entspricht. Damit ein Benutzer den Tragegriff 26 jedoch wieder aus seiner Endlage in Betrieb nehmen kann, weist die Querseite 16a eine Griffmulde 27 auf, welches ein Umfassen des Griffs 26 erlaubt, so dass dieser in eine Betriebsposition durch den Benutzer geführt werden kann.

Fig. 2 zeigt den Aufbewahrungsbehälter gemäß vorliegender Erfindung während einer möglichen Benutzung z.B. in einer Küche. Das Handküchengerät 11 wurde durch den Benutzer im Betrieb genommen und ist auf der Seitenfläche 14a, die nun als Arbeitsplatte dient, platziert. Dazu weist das Handküchengerät 11 eine Abstellfläche 23 auf, welche im direkten Kontakt mit der Arbeitsplatte bzw. Seitenfläche 14a steht.

Gemäß einer Ausführungsform ist die Seitenfläche 14a aus einem magnetisierbaren oder magnetischen material, so dass im Kontaktbereich zwischen Handküchengerät 11 und Seitenfläche 14a eine Haltekraft entstehen kann. Dazu kann ebenfalls das Handküchengerät 11 im Bereich seiner Abstellfläche 23 geeignete magnetisierbare und/oder magnetische Mittel aufweisen, so dass eine sichere Fixierung auf der Arbeitsplatte d.h. Seitenfläche 14a gewährleistet werden kann. Auch die Arbeitsschüssel 29 kann eine solch ausgebildete Abstellfläche aufweisen, so dass diese ebenfalls sicher auf der Seitenfläche 14a, die als Arbeitsplatte dient, gehalten bzw. gesichert werden kann. Dies führt zu einem sicheren Betrieb des Handküchengeräts 11 und/oder der Schüssel 29, da diese nicht unbeaufsichtigt umfallen können. Auch die Verarbeitung von Lebensmitteln in der Schüssel 29 wird vereinfacht, da ein Benutzer die Schüssel 29 nicht mehr selbst halten muss.

Neben der als Arbeitsfläche bzw. Arbeitsplatte dienenden Seitenfläche 14a ist der Aufbewahrungsbehälter 10 dargestellt, der weiterhin Zubehör 12 für das Handküchengerät 11 lagern bzw. aufnehmen kann. Ferner kann der Aufbewahrungsbehälter 10 eine weiter abnehmbare Seitenfläche 14b aufweisen, welche jedoch in der Fig. 2 in ihrer entsprechenden Endlage am Grundkörper 13 des Behälters 10 angeordnet ist. Diese zweite Fläche 14b kann beispielsweise als zusätzliche Arbeitsfläche dienen. Dazu kann der Benutzer den Aufbewahrungsbehälter aus der Fig. 2 und die fläche 14b als Arbeitsplatte verwenden, oder alternativ die Seitenfläche 14b abnehmen und diese wie die Seite 14a als Arbeitsplatte direkt verwenden. Somit kann der begrenzte Platz in einer Küche effektiv verwertet werden. Auch in dieser Darstellung des Aufbewahrungsbehälters 10 ist der Tragegriff 26 mit Hilfe des Führungsbereichs 25 in seine Endlage am Grundkörper 13 verschoben, so dass der Benutzer an der Griffmulde 27 den Tragegriff 26 in eine Benutzungslage bringen kann.

Die nicht im Einsatz befindlichen Zubehörteile 12 des Handküchengeräts 11 sind innerhalb des Grundkörpers 13 an einem Träger 18 mit einer Vielzahl von Halterungen 17 fixiert bzw. gelagert. Die Halterungen 17 sind in dieser Ausführungsform als Mulden im Träger 18 geformt, so dass eine sichere Fixierung gewährleistet werden kann.

Fig. 3 zeigt den Aufbewahrungsbehälter mit halbaufgesetzter Seitenfläche. Beispielsweise kann der Grundkörper 13 entlang seines Umfangs ein magnetisches oder magnetisierbares Material aufweisen, so dass die Seitenfläche 14a in dieser Position gesichert werden kann. Dies kann beispielsweise nützlich sein falls die Seitenfläche 14a bzw. abnehmbare Arbeitsplatte ebenfalls aus einem solchen Material zumindest teilweise besteht.

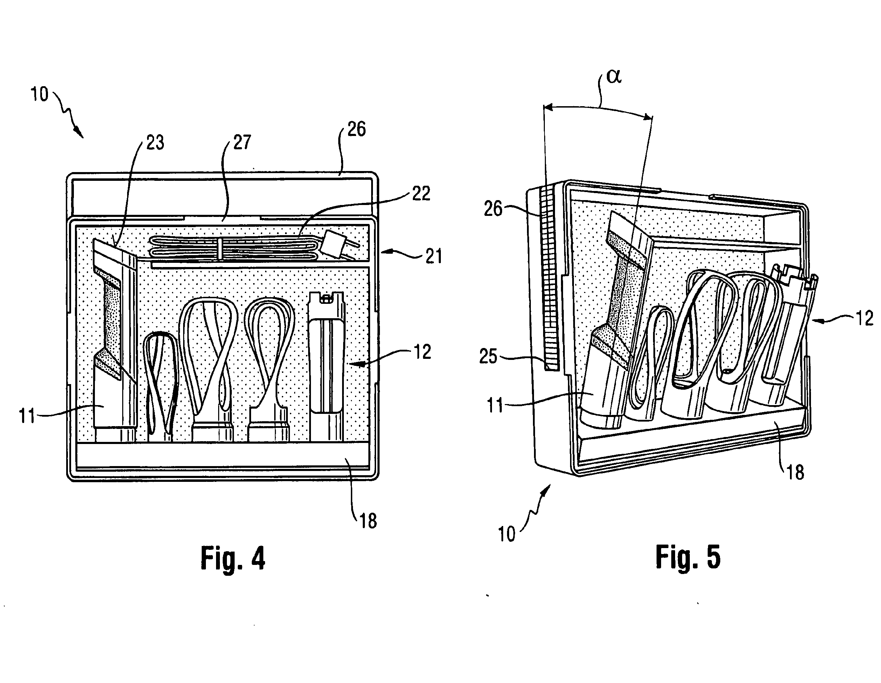

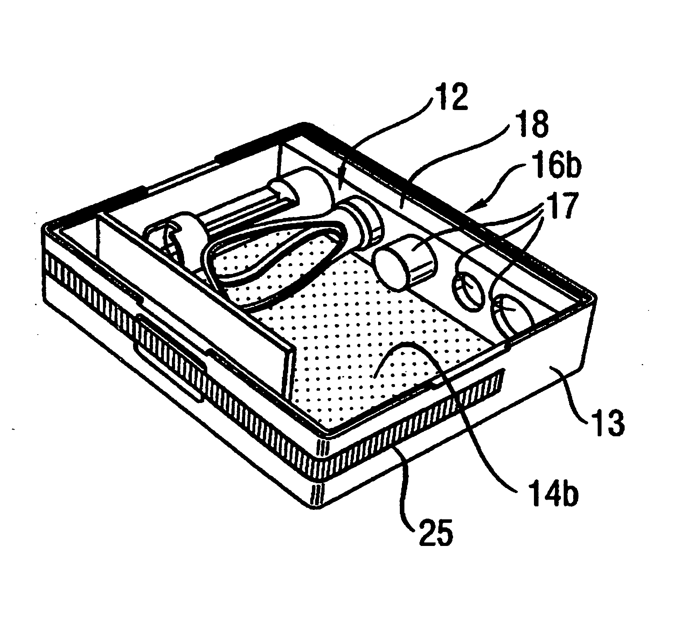

Fig. 4 und 5 zeigen den Aufbewahrungsbehälter gemäß vorliegender Erfindung ohne Seitenfläche 14b, um die genaue Arbeitsweise Trägers 18 für das Zubehör 12 und das Handküchengerät 11. Weiter ist in der Fig. 4 der Tragegriff 26 herausgefahren, so dass ein Benutzer den bestückten Aufbewahrungsbehälter 10 tragen kann. Fig. 4 zeigt den im Führungsbereich 25 eingefahrenen Tragegriff 26.

Der Träger 18 für das Zubehör 12 und Handküchengerät 11 ist im Grundkörper 13 verschwenkbar gelagert, so dass ein Benutzer in einem verschwenkten Zustand gemäß Fig. 5 leicht die gewünschten Teile (Handküchengerät, Zubehör, Stromkabel etc.) entnehmen kann. Der Aufbewahrungsbehälter 10 umfasst Halterungen 17 am Träger 18, die korrespondierend zu den Koppelstellen der Werkzeuge 12 und/oder des Außengehäuses 28 des Handküchengeräts 11 ausgebildet sind. Die Halterungen 17 können somit das Handküchengerät 11 an seinem Außengehäuse 28 halten und sichern.

Die Fig. 5 zeigt den Aufbewahrungsbehälter 10 gemäß vorliegender Erfindung mit verschwenktem Träger 18, wobei der Neigungswinkel des Trägers α insbesondere um 10° bis 20°, vorzugsweise um 15°, zu der abnehmbar ausgebildeten Seitenfläche 14a hin betragen kann. Der Träger ist gemäß einer möglichen Ausführungsform an der unteren Querseite 16b des Grundkörpers 13 angeordnet und kann in Richtung der abnehmbaren Seitenfläche 14a bzw. 14b verschwenkt werden, so dass die gehalterten Gegenstände 11, 12 aus einem Abdeckbereich der oberen Querseitenfläche hervorragen.

Durch den erfindungsgemäßen Aufbewahrungsbehälter kann ein platzsparendes und funktionales Aufbewahren eines Handküchengeräts nebst Zubehör bereitgestellt werden. Der Aufbewahrungsbehälter kann somit leicht zum Grillen bzw. zum Kochen im Freien mitgenommen werden. Auch denkbar ist, dass der Behälter direkt an eine Wand befestigt wird, um so direkten Zugriff auf die gewünschten Gegenstände zu haben. Die magnetische Seitenfläche kann zum Befestigen von Notizen, Kochrezepten etc. dienen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichen

- 10: Aufbewahrungsbehälter
- 11: Handküchengerät, insbesondere Stabmixer
- 12: Zubehör für das Handküchengerät
- 13: Grundkörper
- 14a, 14b: Seitenflächen
- 15a, 15b: Längsseiten des Grundkörpers
- 16a, 16b: Querseiten des Grundkörpers
- 17: Halterungen für Zubehör
- 18: Träger
- 21: Kabelstaufach
- 22: Stromkabel
- 23: Abstellfläche des Handküchengeräts
- 24a, 24b: Längsseiten
- 25: Führungsbereich
- 26: Tragegriff
- 27: Griffmulde
- 28: Außengehäuse
- 29: Schüssel bzw. Arbeitsschüssel
- α: Neigungswinkel des Trägers

## Patentansprüche

1. Aufbewahrungsbehälter (10) für ein Handküchengerät (11), insbesondere einen Stabmixer, nebst Zubehör (12), wobei der Behälter (10) aus einem rahmenförmigen Grundkörper (13) gebildet ist, welcher zwei Seitenflächen (14a, 14b) haltert, wobei vorzugsweise eine Seitefläche (14a) vom Grundkörper (13) abnehmbar ausgebildet ist, **dadurch gekennzeichnet, dass** Halterungen (17) für Handküchengerät (11) und dessen Zubehör (12) auf einem Träger (18) angeordnet sind, welcher vorzugsweise auf der unteren Querseite (16b), insbesondere um 10° bis 20°, vorzugsweise um 15°, zu der abnehmbar ausgebildeten Seitenfläche (14a) hin schwenkbar ausgebildet ist, vorzugsweise so, dass die gehalterten Gegenstände (11, 12) aus einem Abdeckbereich einer oberen Querseitenfläche hervorragen.

2. AufbewahrungsbehältER (10) nach Anspruch 1, **dadurch gekennzeichnet, dass** der Grundkörper (13) rechteckförmig aus zwei Längs- und zwei Querseiten (15a, 15b, 16a, 16b) gebildet ist.

3. Aufbewahrungsbehälter (10) nach einem der Ansprüche 1 oder 2, **dadurch gekennzeichnet, dass** an einer unteren Querseite (16b) des Grundkörpers (13) Halterungen (17) für das Handküchengerät (11) und dessen Zubehör (12) ausgebildet sind.

4. Aufbewahrungsbehälter (10) nach Anspruch 1 oder 3, **dadurch gekennzeichnet, dass** die Halterungen (17) des Trägers (18) korrespondierend zu den Koppelstellen der Werkzeuge (12) und/oder des Außengehäuses (28) des Handküchengeräts (11) ausgebildet sind.

5. Aufbewahrungsbehälter (10) nach einem der vorherigen Ansprüche, **dadurch gekennzeichnet, dass** im Behälter (10) ein Staufach (21) für ein Stromkabel (22) ausgebildet ist.

6. Aufbewahrungsbehälter (10) nach einem der vorherigen Ansprüche, **dadurch gekennzeichnet, dass** die herausnehmbare Seitenfläche (14a) vorzugsweise magnetisch ausgebildet und/oder als Back- oder Arbeitsplatte verwendbar ist.

7. Aufbewahrungsbehälter (10) nach einem der vorherigen Ansprüche, **dadurch gekennzeichnet, dass** die herausnehmbare Seitenfläche (14a) aus einem Metall gefertigt ist und als Standfläche für eine am Gehäuse des Handküchengeräts (11) ausgebildete, vorzugsweise magnetisch oder metallisch ausgebildete, Abstellfläche (23) dient.

8. Aufbewahrungsbehälter (10) nach einem der vorherigen Ansprüche, **dadurch gekennzeichnet, dass** seitlich der Längsseiten (24a, 24b) des Grundkörpers (13) je ein Führungsbereich (25) für einen ausziehbaren, die obere Querseite (14b) übergreifenden Tragegriff (26) ausgebildet ist, wobei vorzugsweise in der im mittleren Bereich der oberen Querseite eine Griffmulde (27) zum untergreifen des Tragegriffs (26) ausgebildet ist.

9. Aufbewahrungsbehälter (10) nach einem der vorherigen Ansprüche, **dadurch gekennzeichnet, dass** die abnehmbare Seitenfläche (14a) am Grundkörper entlang von Führungsnuten führbar ist.

## Claims

1. Storage container (10) for a hand-held kitchen appliance (11), particularly a rod mixer, together with accessories (12), wherein the container (10) is formed from a frame-shaped base body (13) mounting two side surfaces (14a, 14b), wherein preferably one side surface (14a) is constructed to be removable from the base body (13), **characterised in that** mounts (17) for the hand-held kitchen appliance (11) and the accessories (12) thereof are arranged on a support (18), which is constructed preferably on the lower transverse side (16b) to be pivotable, particularly through 10° to 20°, preferably through 15°, towards the side surface (14a) constructed to be removable, preferably so that the mounted articles (11, 12) protrude from a cover region of an upper transverse side surface.

2. Storage container (10) according to claim 1, **characterised in that** the base body (13) is formed to be rectangular from two longitudinal and two transverse sides (15a, 15b, 16a, 16b).

3. Storage container (10) according to one of claims 1 and 2, **characterised in that** mounts (17) for the hand-held kitchen appliance (11) and the accessories (12) thereof are constructed at a lower transverse side (16b) of the base body (13).

4. Storage container (10) according to claim 1 or 3, **characterised in that** the mounts (17) of the support (18) are constructed to correspond with the coupling points of the tools (12) and/or of the outer housing (28) of the hand-held kitchen appliance (11).

5. Storage container (10) according to any one of the preceding claims, **characterised in that** a stowage compartment (21) for a power cable (22) is formed in the container (10).

6. Storage container (10) according to any one of the preceding claims, **characterised in that** the removable side surface (14a) is preferably of magnetic construction and/or usable as a baking plate or work plate.

7. Storage container (10) according to any one of the preceding claims, **characterised in that** the removable side surface (14a) is made of a metal and serves as a stand surface for a support surface (23) which is formed at the housing of the hand-held kitchen appliance (11) and which is preferably of magnetic or metallic construction.

8. Storage container (10) according to any one of the preceding claims, **characterised in that** a respective guide region (25) for a withdrawable carrying handle (26), which extends over the upper side (14b), is constructed laterally of the longitudinal sides (24a, 24b) of the base body (13), wherein a grip trough (27) for grasping under the carrying handle (26) is preferably formed in the middle region of the upper transverse side.

9. Storage container (10) according to any one of the preceding claims, **characterised in that** the removable side surface (14a) can be guided at the base body along guide grooves.

## Revendications

1. Coffret de rangement (10) pour un appareil de cuisine manuel, notamment un mixeur sur pied, avec accessoires (12), le coffret (10) étant formé à partir d'un corps de base (13) en forme de cadre, lequel maintient deux surface latérales (14a, 14b), une surface latérale (14a) de préférence étant réalisée de manière détachable du corps de base (13), **caractérisé en ce que** des dispositifs de fixation (17) pour l'appareil de cuisine manuel (11) et ses accessoires (12) sont disposés sur un support (18), lequel est réalisé de manière pivotante, de préférence sur le côté transversal inférieur (16b), notamment de 10° à 20°, de préférence de 15° en direction de la surface latérale (14a) réalisée de manière détachable, de préférence de manière à ce que les objets maintenus (11, 12) dépassent d'une zone de recouvrement d'une surface supérieure d'un côté latéral.

2. Coffret de rangement (10) selon la revendication 1, **caractérisé en ce que** le corps de base (13) est formé de manière rectangulaire à partir de deux côtés longitudinaux et de deux côtés transversaux (15a, 15b, 16a, 16b).

3. Coffret de rangement (10) selon l'une quelconque des revendications 1 ou 2, **caractérisé en ce que** des dispositifs de fixation (17) pour l'appareil de cuisine manuel (11) et ses accessoires (12) sont réalisés sur un côté transversal inférieur (16b) du corps de base (13).

4. Coffret de rangement (10) selon l'une quelconque des revendications 1 ou 3, **caractérisé en ce que** les dispositifs de fixation (17) du support (18) sont réalisés de manière correspondant aux endroits de couplage des outils (12) et/ou du boîtier extérieur (28) de l'appareil de cuisine manuel (11).

5. Coffret de rangement (10) selon l'une quelconque des revendications précédentes, **caractérisé en ce qu'**un compartiment de rangement (21) pour un câble électrique (22) est réalisé dans le coffret (10).

6. Coffret de rangement (10) selon l'une quelconque des revendications précédentes, **caractérisé en ce que** la surface latérale détachable (14a) est réalisée de préférence de manière magnétique et/ou est utilisable comme plaque de cuisson ou plaque de travail.

7. Coffret de rangement (10) selon l'une quelconque des revendications précédentes, **caractérisé en ce que** la surface latérale détachable (14a) est fabriquée dans un métal et sert de surface de base pour une surface de pose (23) réalisée sur le boîtier de l'appareil de cuisine manuel (11), réalisée de préférence de manière magnétique ou métallique.

8. Coffret de rangement (10) selon l'une quelconque des revendications précédentes, **caractérisé en ce que** latéralement aux côtés longitudinaux (24a, 24b) du corps de base (13) est respectivement réalisée une zone de guidage (25) pour une poignée (26) télescopique ayant prise par dessus le côté transversal supérieur (14b), une cavité encastrée (27) étant réalisée de préférence dans la zone centrale du côté transversal supérieur pour prendre la poignée (26) par le dessous.

9. Coffret de rangement (10) selon l'une quelconque des revendications précédentes, **caractérisé en ce que** la surface latérale détachable (14a) peut être guidée le long du corps de base par des rainures de guidage.
